# EUROPEAN PATENT APPLICATION

(11) **EP 4 844 384 A1**
(43) Date of publication of application: **25.11.2026**
(21) Application number: 26161097.6
(22) Date of filing: 26.02.2026
(51) Int. Cl.: G01N 21/95, B64F 5/60, G01N 21/88, G06T 7/41, G06T 7/42, B64U 101/26

(54) **SYSTEM AND ASSOCIATED METHODS FOR DETECTING ANOMALIES ON A SURFACE**

(30) Priority: 21.05.2025 US 202519215093
(71) Applicant: The Boeing Company, Arlington, VA 22202 (US)
(72) Inventor: CRAMBLITT, Robert M., Arlington, 22202 (US)
(74) Representative: Bryn-Jacobsen, Caelia

(57) **Abstract**

Disclosed herein is a system and method for detecting anomalies (103) on a surface (102). The system includes a light source (104) configured to illuminate (118) the surface and a camera (106) configured to capture at least one image (108) of the surface when illuminated. The camera is positioned at a viewing direction (107) relative to the surface that differs from a dominant reflected light direction (121) associated with the light source. A processor (110) analyzes the captured image(s) to detect glint features corresponding to surface anomalies (103). In some examples, the processor determines a statistical distribution of pixel intensities to identify outlier pixels as detected glint features. In other examples, the processor enhances high frequency content in the image(s) using frequency-domain filtering to detect glint features.

## Description

### FIELD

This disclosure relates generally to surface anomaly detection and, more particularly, to systems and methods for detecting surface anomalies based on glint observation.

### BACKGROUND

Surface inspection techniques for structures such as aircraft assemblies, marine vessels, and industrial components are important for maintaining operational integrity and detecting early signs of material degradation. Conventional inspections are typically performed visually by trained personnel or aided by imaging systems that rely on direct visual detection of surface anomalies. However, these inspections are often time-consuming, labor-intensive, and subject to human variability, as their effectiveness can be influenced by surface conditions, lighting environments, and operator experience. In some cases, surface anomalies, such as corrosion, cracks, or foreign object debris, may be difficult to detect if they do not produce strong visual cues, which can lead to potential oversight during surface inspections.

### SUMMARY

The subject matter of the present application has been developed in response to the present state of the art, and in particular, in response to the shortcomings with anomaly detection systems, that have not yet been fully solved by currently available techniques. Accordingly, the subject matter of the present application has been developed to provide systems and associated methods for detecting anomalies on a surface that overcome at least some of the above-mentioned shortcomings of prior art techniques.

The following is a non-exhaustive list of examples, which may or may not be claimed, of the subject matter, disclosed herein.

Disclosed herein is a system for detecting anomalies on a surface. The system includes a light source, a camera, and a processor. The light source is configured to illuminate the surface. The camera is configured to capture at least one image of the surface when the surface is illuminated by the light source. The processor is communicatively coupled to the camera and configured to analyze the at least one image to detect glint features. In the system, the camera is positioned at a viewing direction relative to the surface such that the viewing direction differs from a dominant reflected light direction associated with the light source. A glint feature detected by the processor is referred to as a detected glint feature. When detected, the detected glint feature in the at least one image corresponds to an anomaly on the surface. The preceding subject matter of this paragraph characterizes example 1 of the present disclosure.

The processor is configured to detect glint features by determining a statistical distribution of pixel intensities within a selected region of interest of the at least one image. The preceding subject matter of this paragraph characterizes example 2 of the present disclosure, wherein example 2 also includes the subject matter according to example 1, above.

The processor is configured to detect glint features by enhancing high-frequency content in the at least one image using a frequency-domain filtering technique. The preceding subject matter of this paragraph characterizes example 3 of the present disclosure, wherein example 3 also includes the subject matter according to any of examples 1-2, above.

The light source may include at least one of an ambient light source or a directional light source. The preceding subject matter of this paragraph characterizes example 4 of the present disclosure, wherein example 4 also includes the subject matter according to any of examples 1-3, above.

At least one of the light source or the camera is selectively movable relative to the surface to vary a reflected light angle relative to the surface. The preceding subject matter of this paragraph characterizes example 5 of the present disclosure, wherein example 5 also includes the subject matter according to any of examples 1-4, above.

The processor is configured to determine a location of the detected glint feature in the at least one image and to map the location of the detected glint feature to a corresponding position on a digital model of the surface. The preceding subject matter of this paragraph characterizes example 6 of the present disclosure, wherein example 6 also includes the subject matter according to any of examples 1-5, above.

The at least one image includes a sequence of images captured by the camera during relative motion between the surface and at least one of the light source or the camera. The preceding subject matter of this paragraph characterizes example 7 of the present disclosure, wherein example 7 also includes the subject matter according to any of examples 1-6, above.

The processor is configured to flag a location of the detected glint feature in the at least one image for a follow-up visual inspection of the surface. The preceding subject matter of this paragraph characterizes example 8 of the present disclosure, wherein example 8 also includes the subject matter according to any of examples 1-7, above.

At least one of the light source is configured to direct light onto the surface at an angle relative to the surface or the camera is configured to capture at least one image of the surface from an angle relative to the surface. The preceding subject matter of this paragraph characterizes example 9 of the present disclosure, wherein example 9 also includes the subject matter according to any of examples 1-8, above.

Further disclosed herein is a method of detecting anomalies on a surface. The method includes orienting a light source to direct light onto the surface and a camera to capture at least one image of the surface, such that the camera is positioned at a viewing direction relative to the surface that differs from a dominant reflected light direction associated with the light source. The method also includes illuminating light from the light source onto the surface and capturing, using the camera, at least one image of the surface when the surface is illuminated by the light source. The method further includes analyzing, via a processor, the at least one image to detect glint features in the at least one image, where a glint feature detected by the processor is a detected glint feature. Additionally, the method includes identifying the detected glint feature as anomalies on the surface. The preceding subject matter of this paragraph characterizes example 10 of the present disclosure.

Analyzing the at least one image includes determining a statistical distribution of pixel intensities within a selected region of interest, detecting any higher-intensity outlier pixels within the selected region of interest having an intensity value greater than a statistical threshold, and identifying a higher-intensity outlier pixel as the detected glint feature in the at least one image. The preceding subject matter of this paragraph characterizes example 11 of the present disclosure, wherein example 11 also includes the subject matter according to example 10, above.

The statistical threshold is calculated as a number of standard deviations above a mean pixel intensity within the selected region of interest. The preceding subject matter of this paragraph characterizes example 12 of the present disclosure, wherein example 12 also includes the subject matter according to example 11, above.

Determining the statistical distribution includes generating a histogram of pixel intensities within the selected region of interest. The preceding subject matter of this paragraph characterizes example 13 of the present disclosure, wherein example 13 also includes the subject matter according to example 11, above.

Analyzing the at least one image includes enhancing high-frequency content in the at least one image using a frequency-domain filtering technique. The preceding subject matter of this paragraph characterizes example 14 of the present disclosure, wherein example 14 also includes the subject matter according to example 10, above.

The frequency-domain filtering technique includes applying a root filter that enhances magnitude information and preserves phase information of a frequency domain representation. The preceding subject matter of this paragraph characterizes example 15 of the present disclosure, wherein example 15 also includes the subject matter according to example 14, above.

The method includes selectively moving at least one of the light source or the camera relative to the surface to vary a reflected light angle relative to the surface. The preceding subject matter of this paragraph characterizes example 16 of the present disclosure, wherein example 16 also includes the subject matter according to any of examples 10-15, above.

The method includes determining a location for the detected glint feature in the at least one image and mapping the location of the detected glint feature to a corresponding position on a digital model of the surface. The preceding subject matter of this paragraph characterizes example 17 of the present disclosure, wherein example 17 also includes the subject matter according to any of examples 10-16, above.

The method includes flagging a location of the detected glint feature for a follow-up visual inspection of the surface. The preceding subject matter of this paragraph characterizes example 18 of the present disclosure, wherein example 18 also includes the subject matter according to any of examples 10-17, above.

The at least one image includes a sequence of images captured by the camera during relative motion between the surface and at least one of the light source and the camera. The preceding subject matter of this paragraph characterizes example 19 of the present disclosure, wherein example 19 also includes the subject matter according to any of examples 10-18, above.

Further disclosed herein is a method of detecting anomalies on a surface. The method includes orienting a light source to direct light onto the surface and a camera to capture at least one image of the surface, such that the camera is positioned at a viewing direction relative to the surface that differs from a dominant reflected light direction associated with the light source. The method also includes illuminating light from the light source onto the surface and capturing, using the camera, at least one image of the surface when the surface is illuminated by the light source. The method further includes analyzing, via a processor, the at least one image to detect glint features in the at least one image, where a glint feature detected by the processor is a detected glint feature. The image is analyzed by performing a frequency transform on the at least one image to generate a frequency domain representation, applying a filter to the frequency domain representation to enhance high-frequency content, performing an inverse transform on the frequency domain representation to generate an enhanced spatial domain image, thresholding the enhanced spatial domain image to identify one or more pixels having an intensity value greater than an intensity threshold, and identifying the one or more pixels as the detected glint features as anomalies on the surface. The preceding subject matter of this paragraph characterizes example 20 of the present disclosure.

The described features, structures, advantages, and/or characteristics of the subject matter of the present disclosure may be combined in any suitable manner in one or more examples and/or implementations. In the following description, numerous specific details are provided to impart a thorough understanding of examples of the subject matter of the present disclosure. One skilled in the relevant art will recognize that the subject matter of the present disclosure may be practiced without one or more of the specific features, details, components, materials, and/or methods of a particular example or implementation. In other instances, additional features and advantages may be recognized in certain examples and/or implementations that may not be present in all examples or implementations. Further, in some instances, well-known structures, materials, or operations are not shown or described in detail to avoid obscuring aspects of the subject matter of the present disclosure. The features and advantages of the subject matter of the present disclosure will become more fully apparent from the following description and appended claims, or may be learned by the practice of the subject matter as set forth hereinafter.

### BRIEF DESCRIPTION OF THE DRAWINGS

In order that the advantages of the subject matter may be more readily understood, a more particular description of the subject matter briefly described above will be rendered by reference to specific examples that are illustrated in the appended drawings. Understanding that these drawings, which are not necessarily drawn to scale, depict only certain examples of the subject matter and are not therefore to be considered to be limiting of its scope, the subject matter will be described and explained with additional specificity and detail through the use of the drawings, in which:
Figure 1 is a schematic block diagram of a system for detecting anomalies on a surface, illustrating a light source and a camera of the system interacting with the surface, according to one or more examples of the present disclosure;
Figure 2 is a schematic perspective view of a system for detecting anomalies on a surface, illustrating a light source and a camera of the system interacting with an aircraft in a hangar environment, according to one or more examples of the present disclosure;
Figure 3 is a schematic view of a sample image captured by the camera of the system of Figure 2, with detected glint features within a selected region of interest, according to one or more examples of the present disclosure;
Figure 4A is a schematic perspective view of an example of a system for detecting anomalies on a surface, with a light source and a camera in a first location relative to the surface to capture images from the first location, according to one or more examples of the present disclosure;
Figure 4B is a schematic perspective view of the system of Figure 4A, with the camera moved to a second location relative to the surface to capture images from the second location, according to one or more examples of the present disclosure;
Figure 4C is a schematic view of a sequence of images captured by the system when the camera was positioned at the first location shown in Figure 4A and the second location shown in Figure 4B, according to one or more examples of the present disclosure;
Figure 5 is a schematic block diagram of an example of a mapping process, with a detected glint feature mapped from an image to a corresponding location on a digital model of the surface, according to one or more examples of the present disclosure;
Figure 6 is a schematic flow diagram of a method of detecting anomalies on a surface, according to one or more examples of the present disclosure; and
Figure 7 is a schematic flow diagram of another method of detecting anomalies on a surface, according to one or more examples of the present disclosure.

### DETAILED DESCRIPTION

Reference throughout this specification to "one example," "an example," or similar language means that a particular feature, structure, or characteristic described in connection with the example is included in at least one example of the present disclosure. Appearances of the phrases "in one example," "in an example," and similar language throughout this specification may, but do not necessarily, all refer to the same example. Similarly, the use of the term "implementation" means an implementation having a particular feature, structure, or characteristic described in connection with one or more examples of the present disclosure, however, absent an express correlation to indicate otherwise, an implementation may be associated with one or more examples.

In optical imaging systems, glint-localized bright reflections resulting from specular reflection off a surface-has traditionally been treated as an artifact that interferes with accurate image analysis. Techniques such as polarization filtering, diffuse illumination, and image post-processing have been developed to minimize or eliminate glint from images. While glint behavior has been studied in natural environments, such as ocean surfaces, conventional imaging systems have not exploited glint as a useful indicator of surface conditions on engineered structures. Glint features, as used herein, refer to spatially small, localized bright reflections caused by specular reflections off small surface facets or irregularities. These glint features are distinguishable from larger-area glare, which results from broader, smoother surface reflections.

Contrary to conventional inspection approaches that seek to minimize glint, the present disclosure leverages glint features to aid in surface anomaly detection. Disclosed herein is a system and associated methods for detecting anomalies on a surface utilizing glint features as detection markers. As used herein, the term "anomaly" refers broadly to any irregularity or deviation from an expected surface condition, including but not limited to corrosion, cracks, surface deposits, material loss, or foreign object debris. For example, localized corrosion may create pitting or roughened regions that disrupt the smoothness of the surface, resulting in unique glint signatures when illuminated, which can be detected and analyzed to identify affected areas. By detecting localized glint features in captured images, the disclosed system may facilitate early identification of surface anomalies that may otherwise be difficult to detect through conventional visual inspection methods.

In some examples, the surface may correspond to an exterior surface of an aircraft, such as an exterior fuselage, wing surface, or control surface. Surface inspections on aircraft structures are particularly challenging due to the large surface areas involved, the complexity of the geometry, and variations in surface finish and lighting conditions. Conventional visual inspections are time-consuming, require substantial manual effort, and can be influenced by inconsistent lighting conditions and inspector variability. Moreover, early-stage anomalies such as corrosion pitting or localized surface degradation may not produce strong visible cues under normal inspection conditions. Accordingly, the ability of the system to detect glint features associated with subtle surface irregularities provides an improved approach for aircraft inspection applications, enabling improvement in the reliability and efficiency of surface inspections.

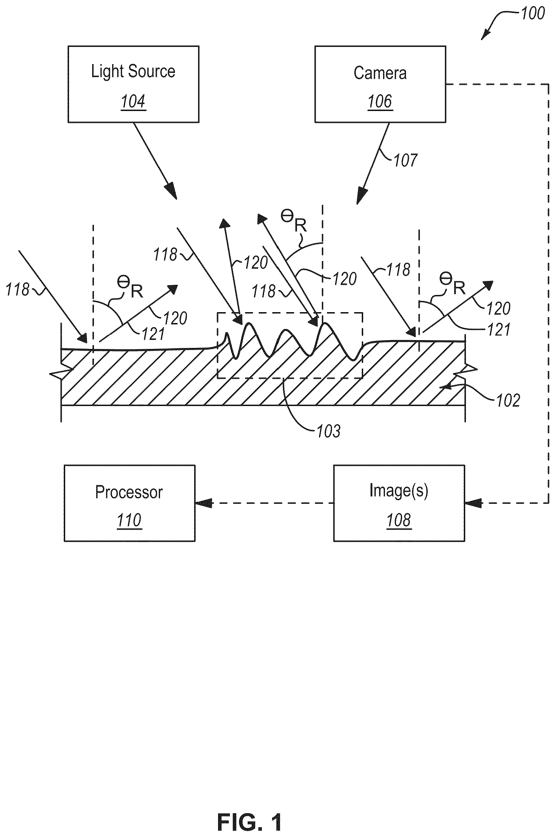

Referring to Figure 1, one example of a system 100 for detecting anomalies of a surface 102 is shown. The surface 102 may be a surface of any structure or component. In some examples, the surface 102 may be made from a metallic material, such as aluminum or titanium, that is capable of producing specular reflections and glint features under appropriate lighting conditions. In other examples, the surface 102 may be made from composite materials (e.g., fiber-reinforced polymers) or other engineered materials that are similarly capable of producing detectable glint features. As shown, the surface 102 includes a localized irregular region, referred to herein as an anomaly 103. The anomaly 103 may present as a surface discontinuity, roughness, pitting, or other surface feature that disrupts the smoothness of the surrounding surface 102. This irregular region may reflect incident light differently than adjacent smooth regions of the surface 102, producing localized bright reflections (i.e., glint features) that can be detected and analyzed to identify the anomaly 103.

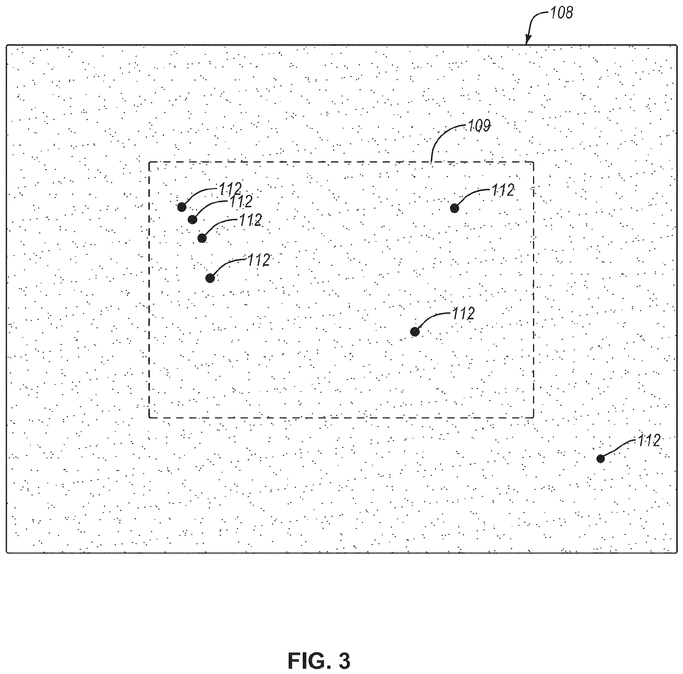

When illuminated by a light source, one or more anomalies 103 may generate glint features due to specular reflection effects. Localized bright reflections detected by the system 100 are referred to herein as detected glint features 112 (see, i.e., Figure 3). Although naturally occurring surface textures, paint bumps, or edges can also produce glint, glint features associated with anomalies, such as corrosion-induced pitting or material loss, tend to exhibit different spatial patterns and clustering behavior. For example, glint features caused by corrosion are more likely to occur in irregular, scattered clusters corresponding to areas of localized surface degradation, whereas glint arising from intentional surface textures tends to be more spatially organized. By analyzing the spatial distribution, intensity, and organization of glint features within the captured images, a processor 110 of the system 100 can help distinguish true anomalies from benign surface features.

In some examples, the anomaly 103 corresponds to corrosion of the surface 102. Corrosion may result in localized material loss, pitting, or roughening of the surface 102, which disrupts the otherwise smooth surface profile. These disruptions can alter the manner in which light reflects off the surface 102, creating localized glint features in images 108 that can be detected and analyzed by the system 100. Early detection of corrosion may be important, as corrosion can compromise the structural integrity of the underlying component if left untreated. By detecting glint features that arise due to corrosion-induced surface changes, the system 100 may facilitate earlier and more reliable identification of corrosion damage than would be possible through conventional visual inspection techniques.

The system 100 includes a light source 104, a camera 106, and a processor 110. The light source 104 is configured to illuminate the surface 102 with incident light rays 118. In some examples, the light source 104 may be a directional light source configured to project light at a defined angle relative to the surface 102. In other examples, the light source 104 may be an ambient light source, such as overhead lighting within an enclosed space (e.g., an aircraft hangar). In yet other examples, the light source 104 may include a combination of an ambient light source and a directional light source. The light source 104 may emit either coherent light (e.g., organized light waves, such as laser light) or non-coherent light (e.g., disorganized light waves, such as from conventional bulbs or LEDs). In some examples, the light source 104 may include additional optics, such as lenses or beam-shaping elements, to further control the spread, intensity, and directionality of the incident light rays 118 projected onto the surface 102.

When the surface 102 is illuminated by the light source 104, incident light rays 118 strike the surface 102, and corresponding reflected light rays 120 are produced. This reflection behavior occurs for both directional and ambient lighting sources, although the distribution and intensity of reflected light rays 120 may vary depending on the light source characteristics and the local surface topography.

The camera 106 is configured to capture at least one image 108 of the surface 102 when illuminated by the light source 104. The camera 106 may be any suitable imaging device configured to capture panchromatic images, such as a digital still camera or a video camera, depending on the particular application and detection requirements. In some examples, the camera 106 may operate in either a snapshot mode or a video sequence mode. Capturing a sequence of images over time may enhance glint detection by enabling analysis from multiple viewing directions and lighting conditions. To facilitate imaging across large or complex surfaces, the camera 106 may be mounted to a movable support structure, such as a robotic arm, ground vehicle, or drone. Movement of the camera 106 relative to the surface 102 enables imaging from different perspectives, which can be useful for inspecting expansive structures, such as aircraft, ships, or industrial assemblies.

In the system 100, the camera 106 is positioned at a viewing direction 107 relative to the surface 102 such that the viewing direction 107 differs from a dominant reflected light direction 121 associated with the light source 104. As used herein, the "viewing direction" refers to the direction from which the camera 106 captures light reflected from the surface 102. Further, as used herein, the "dominant reflected light direction" refers to the direction in which light rays from the light source 104 would be specularly reflected from a smooth, undisturbed portion of the surface 102, based on the geometric relationship where the angle of incidence equals the angle of reflection with respect to the surface normal. That is, by positioning the camera 106 away from the dominant reflected light direction 121, the system 100 avoids capturing strong specular reflections from smooth areas, which may otherwise obscure or mask localized specular reflections (i.e., glints) caused by surface irregularities. A rough surface, such as one affected by anomalies 103 like corrosion or paint loss, introduces microscopic surface facets that reflect incident light at significantly different angles than those produced by a smooth region. As a result, the anomalies 103 generate specular reflections that deviate from the dominant reflected light direction 121 and may be captured by the camera 106 positioned at an off-specular viewing direction. This geometry increases the likelihood that the camera 106 captures glint features produced by small surface anomalies, such as corrosion-induced roughness, that reflect light at a range of non-specular angles. In general, the relative orientation of the light source 104 and the camera 106 may be selected to avoid alignment with a primary specular reflection path, thereby increasing the likelihood of capturing glint features caused by surface anomalies.

The light source 104 and/or the camera 106 may be oriented an angle relative to the surface 102 to achieve the desired separation between the viewing direction 107 and the dominant reflected light direction 121. In some examples, either the light source 104 or the camera 106 may be oriented along a direction substantially normal to the surface 102, assuming the two components are configured such that the camera 106 does not coincide with the dominant reflected light direction 121 of the light source 104. In other examples, both the light source 104 and the camera 106 may be positioned at angles to optimize glint feature capture depending on the surface geometry and inspection conditions. By using an angle for illumination and/or imaging, the system 100 increases the visibility of glint features associated with surface anomalies, to improve detection sensitivity compared to configurations where illumination and imaging occur at normal incidence.

When the surface 102 is illuminated by the light source 104, reflected light rays 120 are produced. As noted above, the camera 106 is positioned such that the viewing direction 107 differs from the dominant reflected light direction 121, which enhances the visibility of glint features associated with surface anomalies. As illustrated in Figure 1, the reflection angle θ_{R} may vary depending on the local topography of the surface 102. In relatively smooth areas, reflected light rays 120 tend to follow a predictable specular path (i.e., dominant reflected light direction) based on the angle of incidence, and when directional lighting is used, these rays may not enter the field of view of the camera 106 unless the camera is positioned near the specular reflection angle. In contrast, surface anomalies 103 may scatter reflected light across a broader range of angles, increasing the likelihood that at least some of the glint-producing rays are captured by the camera.

The image(s) 108 captured by the camera 106 may include at least one panchromatic image, a sequence of overlapping snapshot images, or continuous video frames. The captured images 108 are configured to record localized glint features arising from surface irregularities. In some examples, a lower frame rate may be sufficient, where discrete images are periodically captured as the camera 106 moves relative to the surface 102. In other examples, a higher frame rate (e.g., video capture) may be used to collect a denser sequence of frames for detailed analysis across multiple viewing angles and lighting conditions. In yet other examples, a single long-exposure image may be captured, wherein movement of the light source during the exposure causes glint features to appear more prominently within the captured image. Depending on the application, the system 100 may analyze a single captured image 108 or multiple sequential images to identify anomalies 103 based on detected glint features.

Because surface features of interest, such as corrosion pits, may be smaller than a single pixel, the system 100 does not require direct visual resolution of the surface defect. Instead, the presence of a glint feature can be detected based on localized increases in pixel intensity within the image(s) 108. Accordingly, the imaging resolution of the camera 106 may be selected based on the anticipated glint response from small surface anomalies, balancing practical factors such as inspection speed, surface area coverage, and the detection sensitivity required for the inspection task.

The image(s) 108 captured by the camera 106 are provided to the processor 110, which is communicatively coupled to the camera 106. In some examples, the processor 110 may comprise a hardware-based computing element, such as a microprocessor or another suitable processing device configured to execute programmed instructions or algorithms. The processor 110 is communicatively coupled to the camera 106 through any suitable wired or wireless connection, enabling image data captured by the camera 106 to be transmitted to the processor 110 for analysis. In some examples, the image data may be transmitted in real-time during inspection, while in other examples the image data may be stored and processed at a later time.

The processor 110 is configured to analyze the image 108 to detect glint features associated with anomalies 103 in the image 108. As noted above, localized bright reflections identified through this analysis are referred to as detected glint features 112. In some examples, the processor 110 may perform image processing operations, such as contrast enhancement, frequency-domain filtering, intensity thresholding, or statistical outlier detection, to identify localized regions of increased brightness corresponding to glint features. Upon detection, the processor 110 classifies the detected glint feature 112 as corresponding to an anomaly 103 on the surface 102. As defined herein, the term anomaly 103 encompasses any irregularity, including benign surface textures or intentional surface features, as well as surface defects such as corrosion or material loss. In some examples, the processor 110 may classify a detected glint feature 112 as corresponding to corrosion, or another type of anomaly, based on its intensity pattern, spatial distribution, or other detected characteristics. Additionally, or alternatively, in some examples, the processor 110 may further filter detected glint features 112 based on spatial distribution, intensity patterns, or other characteristics to disregard features likely attributable to benign surface textures, paint variations, or known surface structures. In some examples, regions identified by detected glint features 112 may be flagged for further review, such as a follow-up visual inspection, to verify whether the anomaly 103 corresponds to a surface defect of interest.

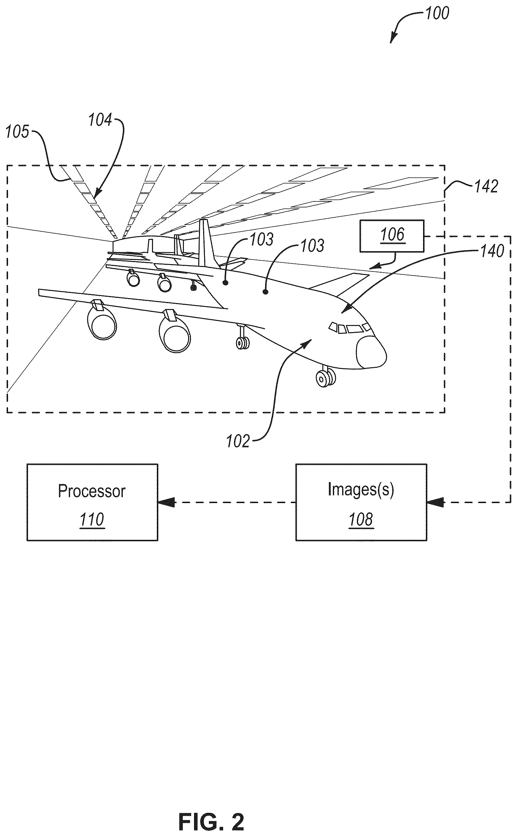

Referring to Figure 2, one example of the system 100 is shown, configured for inspection of a large surface, such as an exterior surface of an aircraft 140. In this example, the surface 102 corresponds to the exterior surface of the aircraft 140, and is positioned within an enclosed environment 142, such as an aircraft hangar or other indoor facility. The light source 104 is an ambient light source 105, providing general illumination across the surface 102 rather than directing focused incident light at specific angles. The camera 106 is positioned to capture images 108 of the surface 102 while illuminated by the ambient light source 105, and transmits the images 108 to the processor 110 for glint-based anomaly detection as previously described.

Although the light source 104 in this example provides ambient illumination, glint features may still be produced under other suitable conditions. Variations in the surface geometry, surface finish, and relative positioning of the camera 106 can create localized specular reflections, even without a highly directional light source. In some examples, natural variations in overhead lighting or localized reflections from fixtures within the enclosed environment 142 may enhance glint visibility on the surface 102. The system 100 may therefore be adapted to operate in environments where directional lighting control is limited, relying on ambient illumination to detect anomalies 103 through analysis of the captured glint features.

The aircraft 140 includes one or more anomalies 103 on its exterior surface. The anomalies 103 may correspond to corrosion, surface pitting, material degradation, or other irregularities that disrupt the smoothness of the surface 102. Although such anomalies may be difficult to detect through conventional visual inspection under ambient lighting conditions, the system 100 enables detection by identifying localized glint features arising from these surface irregularities within the captured images 108.

Referring to Figure 3, one example of an image 108 captured and processed by the system 100 is shown. Although Figure 3 symbolically illustrates the presence of detected glint features 112 within an image 108, the image is not intended to represent actual pixel-level intensity data. Instead, it shows the spatial location of glint detections within a simplified region of interest 109. The image 108 represents an image initially captured by the camera 106 and subsequently analyzed by the processor 110 to detect glint features associated with surface anomalies.

As shown, the processor 110 has identified multiple detected glint features 112 within the image 108. In some examples, the system 100 may define a region of interest 109 within the image 108. That is, the region of interest 109 enables the system 100 to focus anomaly detection efforts on a selected portion of the surface 102 captured in the image 108, which may improve processing efficiency, reduce false positives, or enable more detailed analysis of areas expected to contain surface defects. In some examples, detected glint features 112 located outside the region of interest 109 may also be identified; however, the system 100 may prioritize or focus further analysis and evaluation efforts on detected glint features 112 located within the region of interest 109. The region of interest 109 may be manually selected by an operator or automatically determined based on initial image analysis. As shown, multiple detected glint features 112 are present within the region of interest 109 that correspond to an anomaly 103 on the surface 102. In some examples, the detected glint features 112 may be flagged for further review or evaluation to confirm whether the corresponding surface region exhibits a true defect, such as corrosion or material loss.

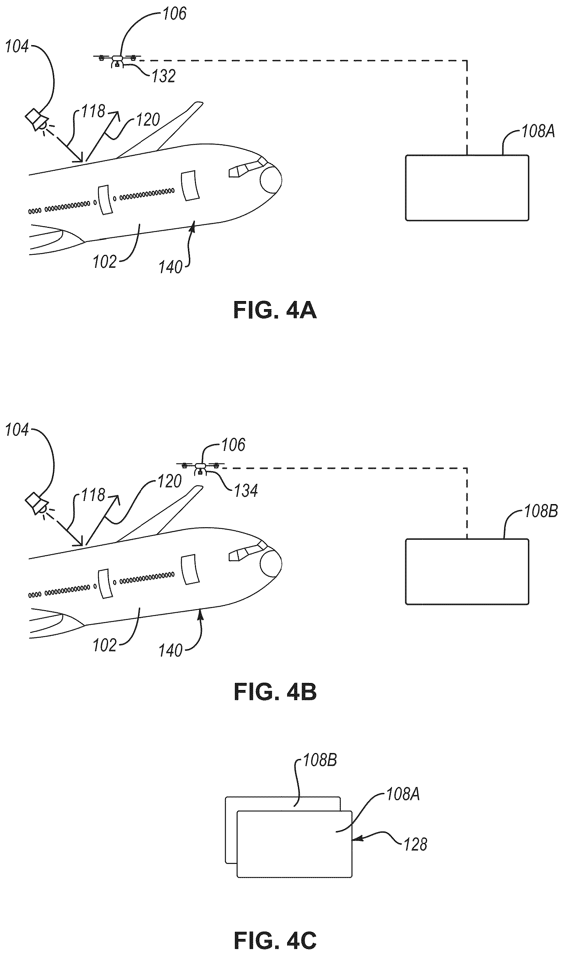

Referring to Figures 4A-4C, one example of the system 100 configured for capturing a sequence of images during relative motion between the surface 102 and the camera 106 is shown. The surface 102 corresponds to the exterior surface of an aircraft 140 and is illuminated by a light source 104. In this example, the light source 104 is positioned to project incident light rays 118 onto the surface 102 at an angle, creating reflected light rays 120 that may produce localized glint features associated with surface anomalies.

As shown in Figure 4A, the camera 106 is positioned at a first location 132 relative to the surface 102 and captures a first image 108A of the surface 102. In some examples, the camera 106 may be mounted to a movable support structure, such as a drone or robotic arm, to facilitate controlled movement relative to the surface 102. Movement of the camera 106 relative to the surface 102 changes the viewing direction and the captured reflection patterns, which may improve the likelihood of detecting glint features.

As shown in Figure 4B, the camera 106 has moved to a second location 134 relative to the surface 102, spaced apart from the first location 132, and captures a second image 108B. In this manner, the system 100 generates a sequence of images 128 (e.g., images 108A and 108B) representing the same surface area captured from different perspectives. By varying the camera position relative to the surface 102, the system 100 may alter the reflected light angle θ_{R}, to enable detection of glint features that might not be visible from a single viewpoint. This technique can improve anomaly detection by highlighting surface irregularities under a range of lighting and viewing conditions.

As shown in Figure 4C, the sequence of images 128 may be stored, processed, or displayed for further analysis. In some examples, the processor 110 may perform comparative or cumulative analysis across the sequence of images 128 to identify glint features that persist across multiple viewpoints, strengthening confidence that the corresponding surface area contains a true surface anomaly. Analysis of the sequence of images 128 may also assist in filtering out transient glint artifacts or benign surface textures that are angle-dependent and inconsistent across multiple images.

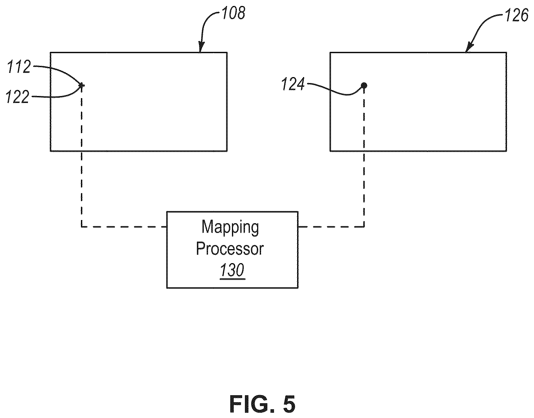

Referring to Figure 5, one example of the system 100 configured to map a detected glint feature 112 to a corresponding location on a digital model 126 of the surface 102 is shown. As shown, a detected glint feature 112 is identified in the captured image 108, and a corresponding location 122 of the detected glint feature 112 is determined within the image 108. A mapping processor 130 receives the location 122 and maps it to a corresponding position 124 on a digital model 126 of the surface 102. In some examples, the mapping processor 130 is implemented as part of the processor 110. In other examples, the mapping processor 130 may be a separate processing unit, such as a standalone computer, a cloud-based processor, or an inspection system server. Accordingly, the system 100 may enable visualization and tracking of anomalies 103 within a digital representation of the structure or component.

Mapping detected glint features 112 to a digital model 126 may useful for facilitating accurate localization of anomalies 103 on a physical structure. Specifically, mapping may assist where grayscale images or coordinate references alone do not provide sufficient spatial context for visual inspection by an inspector. By visualizing the anomalies 103 on a digital representation of the surface 102, inspectors can more easily identify and assess the affected areas. Accordingly, mapping may improve inspection planning, documentation, and communication among maintenance teams.

Alternative methods for locating detected glint features 112 on the physical surface 102 may also be employed. For example, the system 100 may utilize coordinates grids, annotated images, or inspection reports linking detected glint features 112 to specific surface regions. These methods can be effective in scenarios where a digital model is unavailable, unnecessary, or impractical to generate.

Referring back to Figure 1, in some examples, the processor 110 is configured to detect glint features by determining a statistical distribution of pixel intensities within a selected region of interest of the image(s) 108. For example, the processor 110 may analyze the pixel intensity values within the region of interest 109 to identify localized deviations from an expected baseline distribution, such as by calculating the mean, standard deviation, or other statistical measures of pixel brightness (see, i.e., Figure 3). Localized regions exhibiting statistically significant intensity increases may be identified as detected glint features.

In other examples, or in combination with statistical analysis, the processor 110 may be configured to detect glint features by enhancing high-frequency content in the image(s) 108 using a frequency-domain filtering technique. For example, the processor 110 may apply a Fourier transform or other frequency-domain transformation to the image data, and subsequently apply a high-pass filter to isolate features corresponding to small, sharp intensity variations characteristic of glint points. The enhanced high-frequency content may then be analyzed to identify detected glint features associated with anomalies 103.

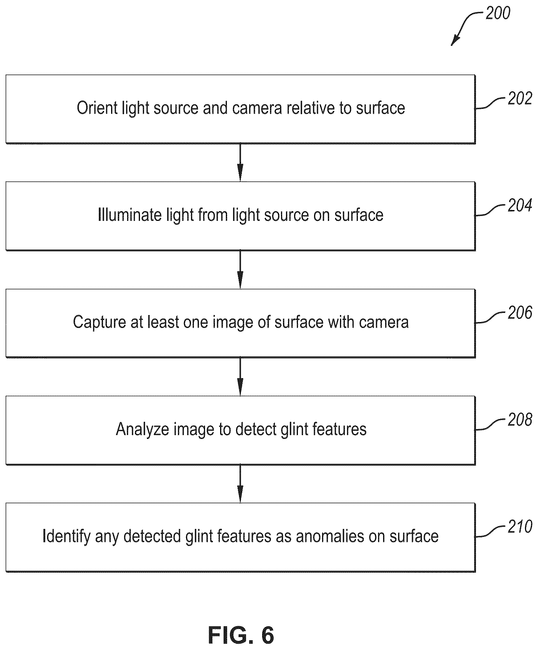

Referring to Figure 6, one example of a method 200 for detecting anomalies 103 on a surface 102, is shown. The method includes (block 202) orienting a light source 104 to direct light onto the surface 102 and a camera 106 to capture at least one image 108 of the surface, such that the camera 106 is positioned at a viewing direction 107 relative to the surface 102 that differs from a dominant reflected light direction 121 associated with the light source 104. The relative orientation of the light source 104 and camera 106 is selected to avoid alignment with a primary specular reflection path, thereby enhancing the likelihood of capturing glint features arising from surface anomalies rather than smooth-surface glare. The orientation supports improved detection of localized intensity anomalies indicative of corrosion, pitting, or other irregularities. In some examples, the light source 104 or the camera 106 is oriented at a non-normal angle relative to the surface normal.

The method also includes (block 204) illuminating light from the light source 104 onto the surface 102. In some examples, the light source 104 may be stationary, while in other examples, the light source 104 may be movable relative to the surface 102 to vary the angle of reflected light rays. The light source 104 may provide either directional or ambient illumination depending on the inspection environment.

The method further includes (block 206) capturing, using the camera 106, at least one the image 108 of the surface 102 when the surface 102 is illuminated by the light source 104. The camera 106 is configured to capture panchromatic images, and may capture a single image, a series of snapshot images, or continuous video frames, depending on the application requirements. In some examples, relative movement between the camera 106 and the surface 102 may be used to capture multiple images from different angles of the same area to improve glint detection sensitivity.

The method additionally includes (block 208) analyzing, via a processor 110, the image(s) 108 to detect glint features in the image(s) 108. The analysis may include processing operations such as intensity thresholding, statistical distribution analysis, or frequency-domain filtering to identify localized bright reflections.

In some examples, analyzing the image(s) 108 comprises determining a statistical distribution of pixel intensities within a selected region of interest 109 of the image(s) 108. The processor 110 may detect any higher-intensity outlier pixels within the selected region of interest 109 that have an intensity value greater than a statistical threshold, such as a threshold based on the mean pixel intensity and standard deviation. Each detected higher-intensity outlier pixel may then be identified as a detected glint feature 112 within the image(s) 108. In some examples, the statistical threshold used to detect higher-intensity outlier pixels is calculated based on the standard deviation of pixel intensities within the selected region of interest 109. For example, the processor 110 may classify a pixel as a higher-intensity outlier if its intensity value exceeds the mean pixel intensity by a specified number of standard deviations. In other examples, determining the statistical distribution of pixel intensities within the selected region of interest 109 may comprise generating a histogram of the pixel intensity values. The histogram may be analyzed to identify higher-intensity outlier pixels based on their deviation from the overall distribution, enabling robust detection of localized glint features 112.

In other examples, or in combination, the processor 110 may enhance high-frequency content within the image(s) 108 using a frequency-domain filtering technique, such as applying a root filter that enhances magnitude information while preserving phase information. The enhanced high-frequency data may be analyzed to identify detected glint features 112 associated with anomalies 103. A glint feature detected through any of these methods by the processor 110 is referred to as a detected glint feature 112.

The method also includes (block 210) identifying the detected glint features 112 as anomalies 103 on the surface 102. In some examples, the processor 110 may further classify a detected glint feature 112 as indicative of corrosion based on its intensity pattern, spatial distribution, or other characteristics. Additionally, or alternatively, in some examples, locations 122 of detected glint features 112 may be determined within the captured image(s) 108 and mapped to corresponding positions 124 on a digital model 126 of the surface 102 using a mapping processor 130. Mapping detected glint features 112 to a digital model 126 may facilitate easier visualization and localization of potential surface defects for subsequent review. In some examples, the method 200 may further include flagging the corresponding positions 124 for follow-up visual inspection to verify the nature of the detected anomalies.

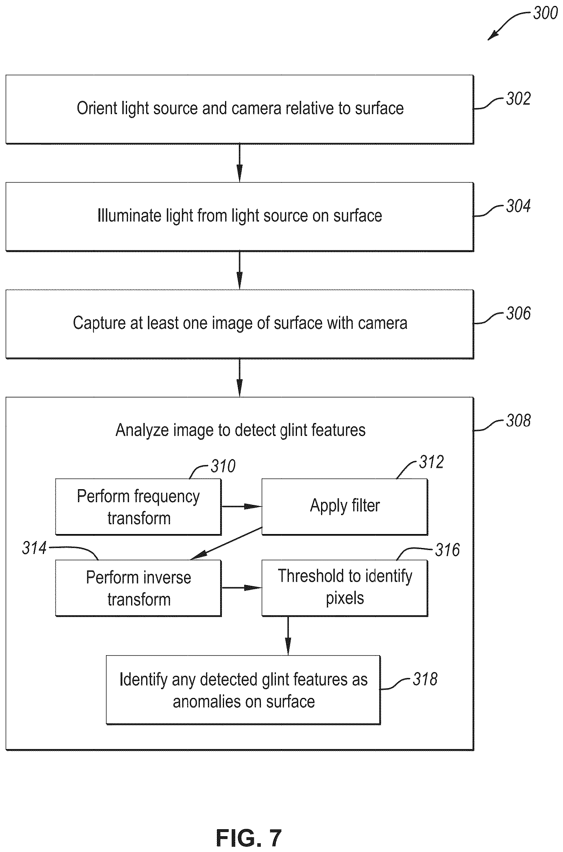

Referring to Figure 7, one example of a method 300 for detecting anomalies 103 on a surface 102 is shown. The method 300 generally includes steps similar to those described above with respect to method 200 of Figure 6, including (block 302) orienting a light source 104 to direct light onto the surface 102 and a camera 106 to capture at least one image 108 of the surface 102, such that the camera 106 is positioned at a viewing direction 107 relative to the surface 102 that differs from a dominant reflected light direction 121 associated with the light source 104; (block 304) illuminating light from the light source 104 onto the surface 102; and (block 306) capturing, using the camera 106, the image(s) 108 of the surface 102 while the surface 102 is illuminated.

The method 300 further includes (block 308) analyzing, via a processor 110, the captured image(s) 108 to detect glint features in the image(s) 108. In the example shown, the processor 110 performs specific frequency-domain operations to detect glint features, as described below.

In block 310, the processor 110 performs a frequency transform on the image 108 to generate a frequency domain representation of the captured image data. In some examples, the frequency transform may comprise a Fourier transform or another suitable frequency-domain transformation. In block 312, the processor 110 applies a filter to the frequency domain representation to enhance high-frequency content. In some examples, the filter may comprise a root filter or another type of high-pass filter configured to selectively enhance magnitude information associated with localized intensity variations while preserving phase information. In block 314, the processor 110 performs an inverse transform on the filtered frequency domain representation to generate an enhanced spatial domain image. The enhanced spatial domain image highlights small, sharp variations in pixel intensity that are characteristic of glint features resulting from surface anomalies. In block 316, the processor 110 applies a thresholding operation to the enhanced spatial domain image and identify one or more pixels having an intensity value greater than an intensity threshold. In block 318, the processor 110 identifies the one or more pixels as detected glint features 112 corresponding to anomalies 103 on the surface 102. In some examples, the detected glint features 112 may be further flagged for follow-up inspection or mapped to a digital model for defect localization, as described above.

In the above description, certain terms may be used such as "up," "down," "upper," "lower," "horizontal," "vertical," "left," "right," "over," "under" and the like. These terms are used, where applicable, to provide some clarity of description when dealing with relative relationships. But, these terms are not intended to imply absolute relationships, positions, and/or orientations. For example, with respect to an object, an "upper" surface can become a "lower" surface simply by turning the object over. Nevertheless, it is still the same object. Further, the terms "including," "comprising," "having," and variations thereof mean "including but not limited to" unless expressly specified otherwise. An enumerated listing of items does not imply that any or all of the items are mutually exclusive and/or mutually inclusive, unless expressly specified otherwise. The terms "a," "an," and "the" also refer to "one or more" unless expressly specified otherwise. Further, the term "plurality" can be defined as "at least two." Moreover, unless otherwise noted, as defined herein a plurality of particular features does not necessarily mean every particular feature of an entire set or class of the particular features.

The term "about" or "substantially" in some examples, is defined to mean within +/-5% of a given value, however in additional examples any disclosure of "about" may be further narrowed and claimed to mean within +/- 4% of a given value, within +/-3% of a given value, within +/- 2% of a given value, within +/- 1% of a given value, or the exact given value. Further, when at least two values of a variable are disclosed, such disclosure is specifically intended to include the range between the two values regardless of whether they are disclosed with respect to separate embodiments or examples, and specifically intended to include the range of at least the smaller of the two values and/or no more than the larger of the two values. Additionally, when at least three values of a variable are disclosed, such disclosure is specifically intended to include the range between any two of the values regardless of whether they are disclosed with respect to separate examples or examples, and specifically intended to include the range of at least the A value and/or no more than the B value, where A may be any of the disclosed values other than the largest disclosed value, and B may be any of the disclosed values other than the smallest disclosed value.

Additionally, instances in this specification where one element is "coupled" to another element can include direct and indirect coupling. Direct coupling can be defined as one element coupled to and in some contact with another element. Indirect coupling can be defined as coupling between two elements not in direct contact with each other, but having one or more additional elements between the coupled elements. Further, as used herein, securing one element to another element can include direct securing and indirect securing. Additionally, as used herein, "adjacent" does not necessarily denote contact. For example, one element can be adjacent another element without being in contact with that element.

As used herein, the phrase "at least one of", when used with a list of items, means different combinations of one or more of the listed items may be used and only one of the items in the list may be needed. The item may be a particular object, thing, or category. In other words, "at least one of" means any combination of items or number of items may be used from the list, but not all of the items in the list may be required. For example, "at least one of item A, item B, and item C" may mean item A; item A and item B; item B; item A, item B, and item C; or item B and item C. In some cases, "at least one of item A, item B, and item C" may mean, for example, without limitation, two of item A, one of item B, and ten of item C; four of item B and seven of item C; or some other suitable combination.

Unless otherwise indicated, the terms "first," "second," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, a system, apparatus, structure, article, element, component, or hardware "configured to" perform a specified function is indeed capable of performing the specified function without any alteration, rather than merely having potential to perform the specified function after further modification. In other words, the system, apparatus, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware which enable the system, apparatus, structure, article, element, component, or hardware to perform the specified function without further modification. For purposes of this disclosure, a system, apparatus, structure, article, element, component, or hardware described as being "configured to" perform a particular function may additionally or alternatively be described as being "adapted to" and/or as being "operative to" perform that function.

The schematic flow chart diagrams included herein are generally set forth as logical flow chart diagrams. As such, the depicted order and labeled steps are indicative of one example of the presented method. Other steps and methods may be conceived that are equivalent in function, logic, or effect to one or more steps, or portions thereof, of the illustrated method. Additionally, the format and symbols employed are provided to explain the logical steps of the method and are understood not to limit the scope of the method. Although various arrow types and line types may be employed in the flow chart diagrams, they are understood not to limit the scope of the corresponding method. Indeed, some arrows or other connectors may be used to indicate only the logical flow of the method. For instance, an arrow may indicate a waiting or monitoring period of unspecified duration between enumerated steps of the depicted method. Additionally, the order in which a particular method occurs may or may not strictly adhere to the order of the corresponding steps shown.

Many of the functional units described in this specification, such as the processor, may be implemented in a variety of ways to emphasize their implementation independence. For example, the processor may be implemented as a hardware circuit comprising custom VLSI circuits, gate arrays, off-the-shelf semiconductors, or other discrete components. Alternatively, the processor may be implemented in programmable hardware devices such as field programmable gate arrays (FPGAs) or programmable logic devices.

In other examples, the processor may be implemented using software or code executing on a general-purpose or special-purpose controller. Executable instructions may be stored together or distributed across multiple locations, and may be organized as procedures, functions, or logical blocks. The processor may execute instructions stored in a variety of computer-readable storage devices, such as RAM, ROM, flash memory, optical storage, or magnetic storage.

The code for carrying out operations may be written in one or more programming languages, including object-oriented languages such as C++ or Java, or procedural languages such as C. Execution may occur entirely on a local processor, partly on a local processor and partly on a remote processor, or entirely remotely over a network connection.

The present subject matter may be embodied in other specific forms. The described examples are to be considered in all respects only as illustrative and not restrictive. All changes which come within the meaning and range of equivalency of the claims are to be embraced within their scope.

## Claims

1. A system (100) for detecting anomalies on a surface (102), the system (100) comprising:
a light source (104) configured to illuminate the surface (102);
a camera (106) configured to capture at least one image (108) of the surface (102) when the surface (102) is illuminated by the light source (104); and
a processor (110) communicatively coupled to the camera (106) and configured to analyze the at least one image (108) to detect glint features in the at least one image (108),
wherein:
the camera (106) is positioned at a viewing direction (107) relative to the surface (102) such that the viewing direction (107) differs from a dominant reflected light direction (121) associated with the light source (104);
a glint feature detected by the processor (110) is a detected glint feature (112); and
when detected, the detected glint feature (112) in the at least one image (108) corresponds to an anomaly (103) on the surface (102).

2. The system (100) of claim 1, wherein the processor (110) is configured to detect glint features by determining a statistical distribution of pixel intensities within a selected region of interest (109) of the at least one image (108).

3. The system (100) of claim 1 or 2, wherein the processor (110) is configured to detect glint features by enhancing high-frequency content in the at least one image (108) using a frequency-domain filtering technique.

4. The system (100) of any one of the preceding claims, wherein the light source (104) comprises at least one of an ambient light source (105) or a directional light source.

5. The system (100) of any one of the preceding claims, wherein at least one of the light source (104) or the camera (106) is selectively movable relative to the surface (102) to vary a reflected light angle (θ_{R}) relative to the surface (102).

6. The system (100) of any one of the preceding claims, wherein the processor (110) is further configured to:
determine a location (122) of the detected glint feature (112) in the at least one image (108); and
map the location (122) of the detected glint feature (112) to a corresponding position (124) on a digital model (126) of the surface (102).

7. The system (100) of any one of the preceding claims, wherein the at least one image (108) comprises a sequence of images (128) captured by the camera (106) during relative motion between the surface (102) and at least one of the light source (104) or the camera (106); or optionally
wherein the processor (110) is configured to flag a location of the detected glint feature (112) in the at least one image (108) for a follow-up visual inspection of the surface (102).

8. The system (100) of any one of the preceding claims, wherein at least one of the light source (104) is configured to direct light onto the surface (102) at an angle relative to the surface (102) or the camera (106) is configured to capture at least one image (108) of the surface (102) from an angle relative to the surface (102).

9. A method (200) of detecting anomalies on a surface (102), the method (200) comprising:
orienting (202) a light source (104) to direct light onto the surface (102) and a camera (106) to capture at least one image (108) of the surface (102), such that the camera (106) is positioned at a viewing direction (107) relative to the surface (102) that differs from a dominant reflected light direction (121) associated with the light source (104);
illuminating (204) light from the light source (104) onto the surface (102);
capturing (206), using the camera (106), the at least one image (108) of the surface (102) when the surface (102) is illuminated by the light source (104);
analyzing (208), via a processor (110), the at least one image (108) to detect glint features in the at least one image (108), wherein a glint feature detected by the processor (110) is a detected glint feature (112); and
identifying (210) the detected glint feature (112) as anomalies (103) on the surface (102).

10. The method (200) of claim 9, wherein analyzing the at least one image (108) comprises:
determining a statistical distribution of pixel intensities within a selected region of interest (109);
detecting any higher-intensity outlier pixels within the selected region of interest having an intensity value greater than a statistical threshold; and
identifying a higher-intensity outlier pixel as the detected glint feature (112) in the at least one image (108).

11. The method (200) of claim 10, wherein the statistical threshold is calculated as a number of standard deviations above a mean pixel intensity within the selected region of interest (109); or optionally
wherein determining the statistical distribution comprises generating a histogram of pixel intensities within the selected region of interest (109).

12. The method (200) of claim 9, wherein analyzing the at least one image (108) comprises enhancing high-frequency content in the at least one image (108) using a frequency-domain filtering technique.

13. The method (200) of claim 12, wherein the frequency-domain filtering technique comprises applying a root filter that enhances magnitude information and preserves phase information of a frequency domain representation.

14. The method (200) of claim 9, further comprising selectively moving at least one of the light source (104) or the camera (106) relative to the surface (102) to vary a reflected light angle (θ_{R}) relative to the surface (102); or optionally
further comprising:
determining a location (122) for the detected glint feature (112) in the at least one image (108); and
mapping the location (122) of the detected glint feature to a corresponding position (124) on a digital model (126) of the surface (102); or optionally
further comprising flagging a location (122) of the detected glint feature (112) for a follow-up visual inspection of the surface (102); or optionally
wherein the at least one image (108) comprises a sequence of images (128) captured by the camera (106) during relative motion between the surface (102) and at least one of the light source (104) and the camera (106).

15. The method (300) of claim 1, wherein
analyzing (308), via the processor (110), the at least one image (108) to detect glint features in the at least one image (108), wherein each glint feature detected by the processor (110) is the detected glint feature (112), by:
performing (310) a frequency transform on the at least one image (108) to generate a frequency domain representation;
applying (312) a filter to the frequency domain representation to enhance high-frequency content;
performing (314) an inverse transform on the frequency domain representation to generate an enhanced spatial domain image;
thresholding (316) the enhanced spatial domain image to identify one or more pixels having an intensity value greater than an intensity threshold; and wherein
identifying (210) the detected glint feature (112) as anomalies (103) on the surface (102) comprises:
identifying (318) each one of the one or more pixels as the detected glint feature (112) corresponding to an anomaly on the surface (102).
